# DEMANDE DE BREVET EUROPEEN

(11) **EP 3 222 445 A1**
(43) Date de publication de la demande: **27.09.2017**
(21) Numéro de dépôt: 17157302.5
(22) Date de dépôt: 22.02.2017
(51) Int. Cl.: B60G 17/027, B66F 3/44

(54) **GROUPE HYDRAULIQUE MOTORISE DESTINE A LA CORRECTION D'ASSIETTE D'UN VEHICULE AUTOMOBILE**

(30) Priorité: 23.03.2016 FR 1652467
(71) Demandeur: PSA Automobiles SA, 78300 Poissy (FR)
(72) Inventeur: HERNETTE, VINCENT, 75014 PARIS (FR); BERTHIAS, GILLES, 91270 VIGNEUX SUR SEINE (FR)

(57) **Abrégé**

La présente invention concerne un groupe hydraulique motorisé destiné à la correction d'assiette d'un véhicule automobile.

Le groupe hydraulique (1) est caractérisé en ce qu'il comprend un vérin à simple effet (2), un moteur électrique (10), dont l'arbre moteur (11) est relié à un mécanisme (12, 14) logé dans le corps (3) du vérin (2) en regard du piston (4) du vérin (2) pour permettre, suivant le sens de rotation du moteur électrique (10), de déplacer en translation le piston (4) dans le corps (3) du vérin (2) dans un sens d'échappement ou d'admission du fluide hydraulique sous pression.

L'invention trouve application à des dispositifs de correction d'assiette de véhicules automobiles.

## Description

La présente invention concerne un groupe hydraulique motorisé destiné à la correction d'assiette d'un véhicule automobile.

On connaît des dispositifs de correction d'assiette hydrauliques ou hydropneumatiques de véhicules automobiles utilisant chacun un groupe hydraulique comprenant essentiellement un réservoir, une pompe volumétrique entraînée par un moteur électrique, une électrovanne de distribution reliée à au moins l'un des éléments de la suspension du véhicule, ainsi qu'un calculateur.

Un tel groupe hydraulique a pour inconvénient d'être d'une structure relativement complexe à cause de la multitude de ses composants et, par conséquent, est relativement coûteux. Cet ensemble conduit souvent à un système centralisé qui alimente les divers récepteurs de la suspension, notamment les vérins de suspension du train de roues avant et/ou arrière du véhicule. En outre, l'architecture d'un tel groupe hydraulique présente l'inconvénient de nécessiter un jeu de canalisations hydrauliques complexes, notamment entre l'électrovanne de distribution et la source de pression, posant alors des problèmes d'implantation de ce groupe hydraulique relativement aux trains de roues avant et/ou arrière du véhicule. Enfin, ce groupe hydraulique pose un problème de temps de montage au véhicule sur la chaîne de production ainsi qu'un problème de fiabilité dû à la présence de raccords multiples pouvant occasionner des risques de fuite du fluide hydraulique.

Le document FR 2 689 818 divulgue un dispositif de correction d'assiette pour véhicule automobile comprenant un vérin associé à chaque roue du véhicule, deux vérins de compensation dont chacun comporte une chambre en communication avec une chambre du vérin de suspension de l'une des roues, deux cames mobiles solidaires de chaque côté d'une roue dentée en prise avec un pignon denté calé sur l'arbre d'un moteur électrique. Les deux cames mobiles sont chacune liées à l'élément mobile, corps ou piston, de l'un des vérins de compensation.

Un tel dispositif est d'une structure extrêmement complexe, coûteuse et difficilement implantable relativement au train de roues avant ou arrière du véhicule.

La présente invention a pour but de pallier les inconvénients ci-dessus de l'art antérieur.

Pour atteindre ce but, l'invention propose un groupe hydraulique motorisé apte à fournir de l'énergie hydraulique à un récepteur et qui est caractérisé en ce qu'il comprend un vérin à simple effet comportant un corps, un piston mobile en translation dans le corps du vérin en délimitant avec ce dernier une chambre de fluide hydraulique sous pression pouvant communiquer avec le récepteur, un moteur électrique, dont l'arbre moteur, coaxial au piston, est relié à un mécanisme logé dans le corps du vérin en regard du piston à l'opposé de la chambre de fluide hydraulique sous pression et permettant, suivant le sens de rotation du moteur électrique, de déplacer en translation le piston dans le corps du vérin dans un sens d'échappement du fluide hydraulique sous pression du récepteur dans la chambre du vérin ou d'admission du fluide hydraulique sous pression de la chambre du vérin dans le récepteur.

De préférence, le mécanisme de déplacement en translation du piston comprend une bague logée dans le corps du vérin et dont la partie centrale est accouplée à l'arbre moteur du moteur électrique par une liaison permettant une rotation de la bague et sa translation le long de l'arbre moteur dans le corps du vérin de manière à permettre à la bague d'exercer un effort de poussée en translation du piston dans le corps du vérin.

Avantageusement, la bague est filetée sur son pourtour externe et vissée dans une partie intérieurement taraudée du corps du vérin.

Avantageusement, le mécanisme de déplacement en translation du piston comprend un chemin de roulement circulaire à billes est interposé entre la bague et l'extrémité de la jupe du piston.

La liaison entre la partie centrale de la bague et l'arbre moteur du moteur électrique est du type à cannelures ou du type prismatique.

Avantageusement, le moteur électrique fait partie d'un ensemble motoréducteur.

En outre, le récepteur fait partie d'un dispositif de correction d'assiette d'un véhicule, notamment automobile.

L'invention vise également un véhicule, notamment automobile, comprenant, associés à un train de roues du véhicule, une suspension et un dispositif de correction d'assiette du véhicule, laquelle suspension comprend pour chaque roue un amortisseur hydropneumatique de suspension et un ressort de suspension et qui est caractérisé en ce que le dispositif de correction d'assiette du véhicule est équipé du groupe hydraulique motorisé tel que défini précédemment et qui est solidaire du châssis du véhicule.

Selon une variante de réalisation, le groupe hydraulique motorisé est raccordé par une conduite à l'amortisseur hydropneumatique de suspension adapté pour assurer une correction d'assiette du véhicule.

Selon une autre variante de réalisation, le groupe hydraulique motorisé est relié par une conduite à un vérin hydraulique annulaire monté concentriquement sur le corps de l'amortisseur et apte à déplacer en translation relativement au corps de l'amortisseur sous la commande du groupe hydraulique une coupelle d'appui de l'extrémité inférieure du ressort de suspension pour assurer une correction d'assiette du véhicule.

L'invention sera mieux comprise, et d'autres buts, caractéristiques, détails et avantages de celle-ci apparaîtront plus clairement dans la description explicative qui va suivre faite en référence aux dessins annexés donnés uniquement à titre d'exemple illustrant un mode de réalisation de l'invention dans lesquels :
- la figure 1 est une vue en perspective avec arrachement partiel du groupe hydraulique conforme à l'invention, occupant une position extrême de fin d'admission du fluide hydraulique sous pression dans un récepteur ;
- la figure 2 est une vue en section longitudinale du groupe hydraulique de la figure 1 ;
- la figure 3 est une vue semblable à celle de la figure 1 et représentant le groupe hydraulique à une position extrême de fin d'échappement du fluide hydraulique provenant du récepteur ;
- la figure 4 est une vue en section longitudinale du groupe hydraulique de la figure 3 ; et
- les figures 5A et 5B sont des vues schématiques représentant l'application du groupe hydraulique de l'invention à la correction d'assiette d'un véhicule à partir du ressort métallique de suspension faisant partie d'un train de roues de ce véhicule.

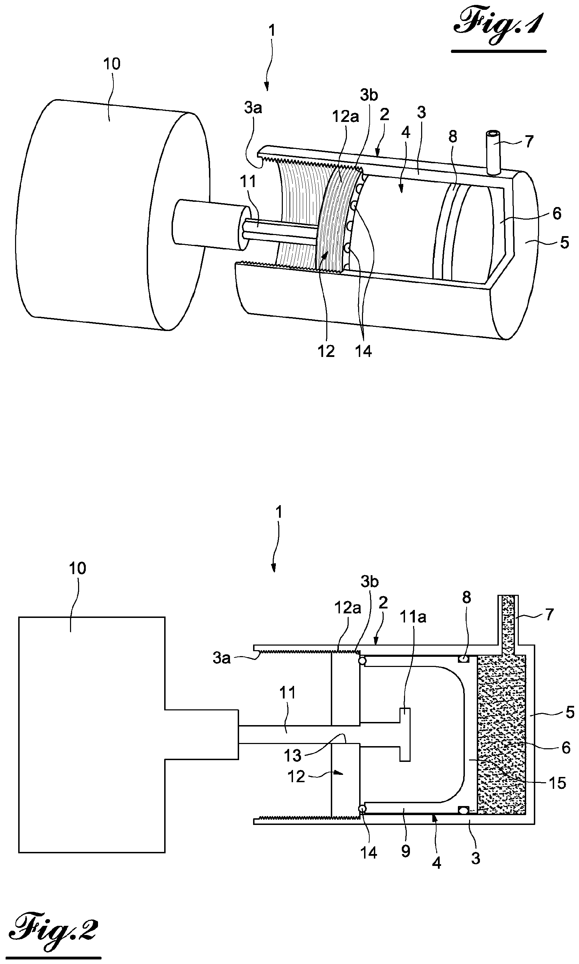

En se reportant tout d'abord aux figures 1 à 4, la référence 1 désigne un groupe hydraulique conforme à l'invention destiné à fournir de l'énergie hydraulique à un récepteur (non représenté) pouvant faire partie d'un dispositif de correction d'assiette d'un véhicule comme on le verra ultérieurement.

Le groupe hydraulique 1 comprend un vérin à simple effet 2 comportant un corps cylindrique 3, un piston 4 mobile en translation dans le corps 3 du vérin 2 en délimitant avec une paroi d'extrémité 5 du corps 3 une chambre interne 6, qui est remplie d'un fluide hydraulique sous pression (huile).

La chambre interne 6 communique avec un raccord tubulaire radialement externe 7 pouvant être raccordé, par l'intermédiaire d'une conduite hydraulique (non représentée), au récepteur.

Le piston 4 comprend un joint annulaire d'étanchéité haute pression 8 en contact glissant avec la face interne du corps cylindrique 3 du vérin 2 et a sa jupe 9 dirigée dans le corps 3 en sens opposé à la chambre interne 6. Le joint annulaire d'étanchéité peut être réalisé en matériau composite.

Le groupe hydraulique 1 comprend également un moteur électrique 10, de préférence faisant partie d'un ensemble motoréducteur, et dont l'arbre moteur 11 s'étend dans le corps cylindrique 3 du vérin 2 coaxialement au piston 4.

L'arbre moteur 11 a sa partie d'extrémité libre 11a en forme de T.

En outre, l'arbre moteur 11 est relié à un mécanisme 12,14 logé dans le corps 3 du vérin 2 en regard de la jupe 9 du piston 4, à l'opposé de la chambre interne 6 et qui permet, suivant le sens de rotation du moteur électrique 10, de déplacer en translation le piston 4 dans le corps 3 du vérin 2 dans un sens d'admission du fluide hydraulique sous pression de la chambre 6 vers et dans le récepteur au travers du raccord 7 et de la conduite hydraulique ou dans un sens d'échappement du fluide hydraulique sous pression du récepteur dans la chambre 6 au travers de la conduite hydraulique et du raccord 7.

De préférence, le mécanisme de déplacement en translation du piston 4 dans le corps 3 du vérin 2 comprend une bague 12 cylindrique massive logée dans le corps 3 du vérin 2 perpendiculairement à l'axe de symétrie longitudinal du corps 3 et dont la partie centrale 13 en forme d'orifice traversant est accouplée à l'arbre moteur 11 du moteur électrique 10 par une liaison permettant une rotation de la bague 12 et sa translation le long de l'arbre moteur 11 dans le corps 3 du vérin 2 de manière à permettre à la bague 12 d'exercer un effort de poussée en translation du piston 4 dans le corps 3 du vérin 2 durant la phase d'admission du fluide hydraulique sous pression de la chambre interne 6 vers et dans le récepteur.

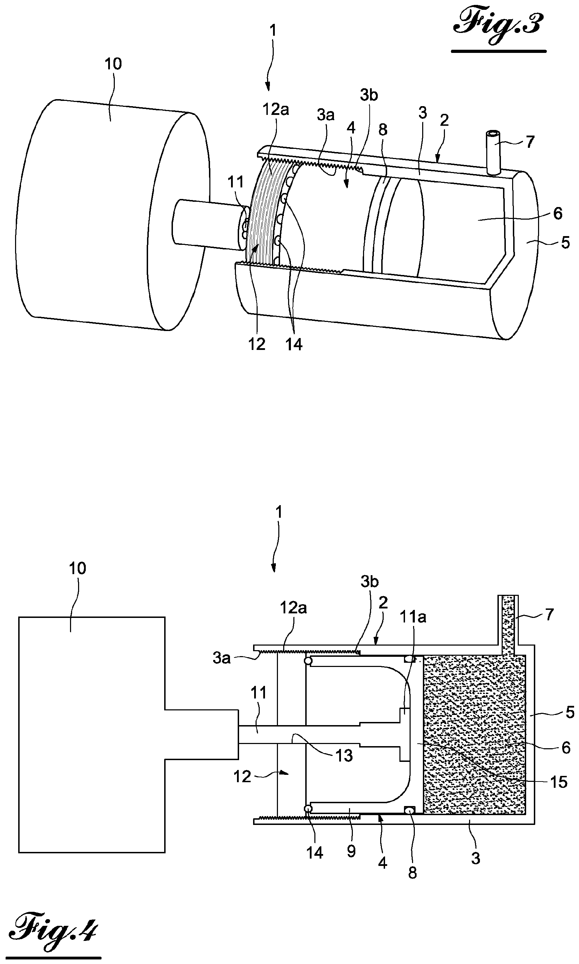

Avantageusement, la bague 12 est filetée extérieurement sur son pourtour externe et toute sa largeur comme référencé en 12a et vissée dans une partie intérieurement taraudée 3a du corps 3 du vérin 2. La partie taraudée 3a du corps 3 s'étend sur une portion de longueur du corps 3 permettant à la bague 12 d'occuper deux positions extrêmes de fin d'admission du fluide hydraulique représentée aux figures 1 et 2 et de fin d'échappement du fluide hydraulique représentée aux figures 3 et 4.

A la position extrême de fin d'admission des figures 1 et 2, la bague 12 est en appui contre un épaulement annulaire interne 3b du corps cylindrique 3 du vérin 2 et à la position extrême de fin d'échappement des figures 3 et 4, la bague 12 se trouve approximativement au voisinage de l'extrémité libre ouverte du corps cylindrique 3 du vérin 2 dirigée vers le moteur électrique 10.

Le mécanisme de déplacement en translation du piston 4 comprend un chemin de roulement circulaire à billes 14 interposé entre la bague 12 et l'extrémité annulaire de la jupe 9 du piston 4 pour permettre la translation de ce dernier sans l'entraîner en rotation lors du déplacement en translation de la bague 12 avec le piston 4 dans le sens d'admission du fluide hydraulique sous pression dans le récepteur.

La liaison entre la partie centrale 13 de la bague 12 et l'arbre moteur 11 du moteur électrique 10 peut être du type à cannelures ou, selon une variante de réalisation, du type prismatique.

A la position extrême de fin d'échappement du fluide hydraulique sous pression représentée aux figures 3 et 4, la tête 15 du piston 4 est en appui par sa face interne sur l'extrémité 11 a en forme de T de l'arbre moteur 11 du moteur électrique 10.

Le moteur électrique 10 et le vérin 2, en utilisation, sont fixes l'un par rapport à l'autre.

Lorsque l'on souhaite fournir du fluide hydraulique sous pression au récepteur à partir de la position extrême de fin d'échappement représentée aux figures 3 et 4, le moteur électrique 10 est entraîné dans un sens de rotation de l'arbre moteur 11 permettant la rotation et la translation de la bague 12 dans le corps 3 du vérin 2 le long de l'arbre moteur 11 vers la paroi 5 du corps 3 du vérin 2, laquelle bague 12 exerce alors un effort de poussée sur le piston 4 par l'intermédiaire du chemin de roulement à billes 14 pour déplacer le piston 4 vers la paroi d'extrémité 5 du corps 3 du vérin 2 et, par conséquent, fournir du fluide sous pression hydraulique au récepteur jusqu'à ce que la bague 12 vienne en appui sur l'épaulement circulaire 3b du corps 3 du vérin 2 comme représenté aux figures 1 et 2.

Ainsi, le déplacement du piston 4 génère un certain débit du fluide hydraulique à la pression d'utilisation du circuit alimentant le récepteur. Autrement dit, le groupe hydraulique 1 de l'invention fonctionne comme une pompe volumétrique avec un débit limité par la cylindrée du vérin 2 à la pression d'utilisation du circuit hydraulique.

Pour assurer l'échappement du fluide hydraulique sous pression du récepteur, le moteur électrique 10 est alimenté en sens inverse pour entraîner en rotation l'arbre moteur 11 qui entraîne en rotation et déplace en translation la bague 12 dans le corps 3 du vérin 2 le long de l'arbre moteur 11 dans le sens opposé à la paroi d'extrémité 5 du corps 3. La pression du fluide exercée sur la tête 15 du piston 4 déplace ce dernier pour le maintenir constamment en appui sur la bague 12 par l'intermédiaire du chemin de roulement à billes 14. En fin de course de la bague 12, la tête 15 du piston 4 revient à nouveau en appui sur l'extrémité en forme de T de l'arbre moteur 11 comme représenté aux figures 3 et 4.

Il est à noter que le pas du filetage de la bague 12 est défini pour retenir l'effort exercé par le fluide hydraulique sous pression sur le piston 4 pour rendre ainsi irréversible le déplacement du piston 4.

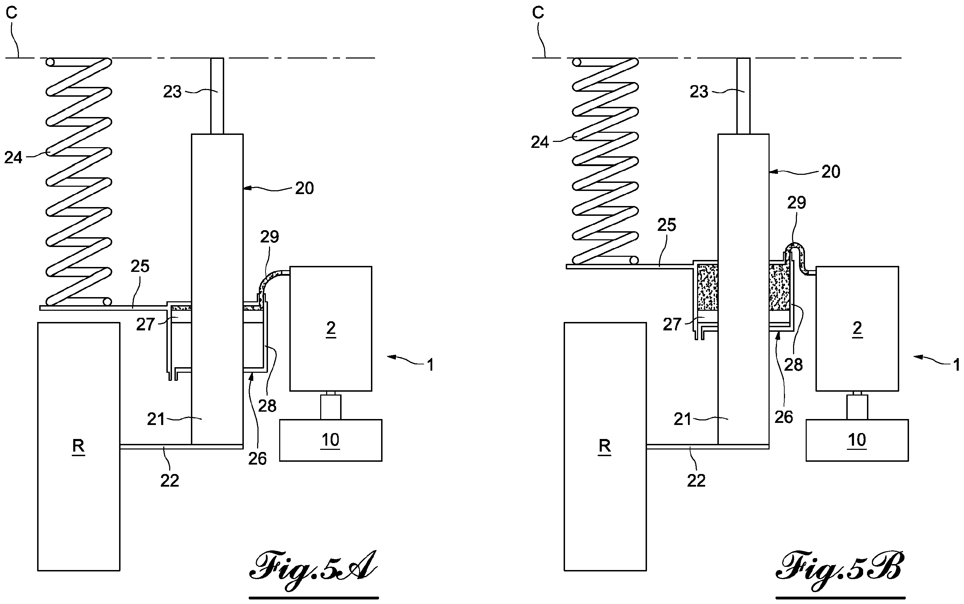

Le groupe hydraulique 1 va être maintenant décrit dans son application à un dispositif de correction d'assiette d'un véhicule automobile en référence aux figures 5A et 5B.

Les figures 5A et 5B représentent une partie d'une suspension associée à un train de roues d'un véhicule automobile, laquelle suspension comprend pour chaque roue R un amortisseur hydropneumatique de suspension 20 dont le corps 21 a son extrémité inférieure fixée à un support 22 de la roue R et la tige 23 est solidaire de la caisse ou châssis C du véhicule et un ressort métallique de suspension 24 interposé entre la caisse C du véhicule et une coupelle 25 faisant partie du corps 21 de l'amortisseur 20 et sur laquelle vient en appui l'extrémité inférieure du ressort 24.

L'amortisseur 20 est également équipé d'un dispositif de correction d'assiette du véhicule, auquel appartient le groupe hydraulique 1, et constitué dans le cas présent par un vérin annulaire 26 monté concentriquement sur le corps 21 de l'amortisseur 20, le vérin annulaire 26 constituant le récepteur auquel est raccordé hydrauliquement le groupe hydraulique 1 pour effectuer la correction d'assiette du véhicule.

Comme cela est connu en soi, le vérin annulaire 26 comporte une partie fixe 27 en forme de paroi circulaire, solidaire du corps 21 de l'amortisseur 20 et une partie cylindrique mobile 28 entourant le corps 21 de l'amortisseur 20 et la partie fixe 27 qui définit dans la partie cylindrique mobile 28 deux chambres de fluide hydraulique sous pression.

La chambre supérieure du vérin annulaire 26 communique avec la chambre 6 du groupe hydraulique 1 par l'intermédiaire d'une conduite hydraulique 29 et la chambre inférieure de ce vérin communique avec une conduite, non représentée, de récupération du fluide hydraulique.

La coupelle 25 est solidaire de la partie cylindrique mobile 28 du vérin annulaire 26 en s'étendant sensiblement perpendiculairement d'un côté du corps 21 de l'amortisseur 20.

La figure 5A représente la situation selon laquelle le ressort de suspension 24 occupe sa position la plus détendue correspondant à une position relativement basse de la coupelle 25 relativement au corps 21 de l'amortisseur 20, c'est-à-dire que la partie cylindrique mobile 28 du vérin annulaire 26 occupe sa position la plus basse relativement à sa partie fixe 27. En outre, le piston 4 du groupe hydraulique 1 occupe sa position extrême de fin d'échappement des figures 3 et 4 correspondant à la position basse de la partie cylindrique mobile 28.

Pour maintenir ou atteindre l'assiette demandée du véhicule, le moteur électrique 10 du groupe hydraulique 1 est commandé pour déplacer, par l'intermédiaire de l'arbre moteur 11, la bague 12 et le chemin de roulement à billes 14, le piston 4 dans le corps 3 du vérin 2 et fournir dans la chambre supérieure du vérin annulaire 26 du fluide hydraulique sous pression permettant de déplacer verticalement vers le haut la coupelle 25 comme représenté en figure 5B.

Bien entendu, le moteur électrique 10 est commandé par un calculateur tenant compte de divers paramètres, tels que la hauteur de référence de la caisse du véhicule relativement au sol, pour envoyer du fluide hydraulique sous pression dans le vérin annulaire 26 afin de maintenir l'assiette du véhicule à sa position demandée.

La conception du groupe hydraulique 1 telle que décrite ci-dessus est adaptée au type d'application ci-dessus décrite en référence aux figures 5A et 5B, dans la mesure où on a besoin d'un volume fini de fluide hydraulique à la pression donnée par la charge portée pour maintenir l'assiette du véhicule lors des variations quasi-statiques du chargement de celui-ci.

Dans l'application des figures 5A et 5B, le groupe hydraulique 1 est solidaire du châssis du véhicule.

Selon une variante de réalisation non représentée, le groupe hydraulique 1 peut être relié par une conduite à l'amortisseur hydropneumatique de suspension 20 conçu pour permettre une correction d'assiette du véhicule, un tel amortisseur hydropneumatique étant connu en soi à cet effet.

Comme cela ressort des figures 5A et 5B, un groupe hydraulique 1 peut être associé à chaque roue du véhicule, mais on peut également envisager un groupe hydraulique par essieu ou train de roues du véhicule pour assurer une correction d'assiette correspondant à une pression commune sur cet essieu, la répartition gauche - droite étant contrôlée par une barre anti-devers du véhicule.

Le groupe hydraulique ci-dessus décrit de l'invention est d'une structure beaucoup plus simple que celle des groupes hydrauliques précédemment connus et, par conséquent, beaucoup moins coûteuse. Il peut facilement s'adapter à tout système de correction d'assiette d'un véhicule de par sa modularité tout en pouvant être facilement intégré à l'organe à commander, ce qui se traduit par une facilité de montage en usine.

## Revendications

1. Groupe hydraulique motorisé (1) apte à fournir de l'énergie hydraulique à un récepteur (20;26), comprenant un vérin à simple effet (2) comportant un corps (3), un piston (4) mobile en translation dans le corps (3) du vérin (2) en délimitant avec ce dernier une chambre de fluide hydraulique sous pression (6) pouvant communiquer avec le récepteur (20;26), un moteur électrique (10), dont l'arbre moteur (11), coaxial au piston (4), est relié à un mécanisme (12 ;14) logé dans le corps (3) du vérin (2) en regard du piston (4) à l'opposé de la chambre de fluide hydraulique sous pression (6) et permettant, suivant le sens de rotation du moteur électrique (10), de déplacer en translation le piston (4) dans le corps (3) du vérin (2) dans un sens d'échappement du fluide hydraulique sous pression du récepteur (20;26) dans la chambre (6) du vérin (2) ou d'admission du fluide hydraulique sous pression de la chambre (6) du vérin (2) dans le récepteur (20;26), **caractérisé en ce que** le mécanisme de déplacement en translation du piston (4) comprend une bague (12) logée dans le corps (3) du vérin (2) et dont la partie centrale (13) est accouplée à l'arbre moteur (11) du moteur électrique (10) par une liaison permettant une rotation de la bague (12) et sa translation le long de l'arbre moteur (11) dans le corps (3) du vérin (2) de manière à permettre à la bague (12) d'exercer un effort de poussée en translation du piston (4) dans le corps (3) du vérin (2).

2. Groupe hydraulique motorisé selon la revendication 1, **caractérisé en ce que** la bague (12) est filetée sur son pourtour externe et vissée dans une partie intérieurement taraudée (3a) du corps (3) du vérin (2).

3. Groupe hydraulique motorisé selon la revendication 1 ou 2, **caractérisé en ce que** le mécanisme de déplacement en translation du piston (4) comprend un chemin de roulement circulaire à billes (14) est interposé entre la bague (12) et l'extrémité de la jupe (9) du piston (4).

4. Groupe hydraulique motorisé selon l'une des revendications 1 à 3, **caractérisé en ce que** la liaison entre la partie centrale (13) de la bague (12) et l'arbre moteur (11) du moteur électrique (10) est du type à cannelures ou du type prismatique.

5. Groupe hydraulique motorisé selon l'une des revendications 1 à 4, **caractérisé en ce que** le moteur électrique (10) fait partie d'un ensemble motoréducteur.

6. Groupe hydraulique motorisé selon l'une des revendications 1 à 5, **caractérisé en ce que** le récepteur (20;26) fait partie d'un dispositif de correction d'assiette d'un véhicule, notamment automobile.

7. Véhicule, notamment automobile, comprenant, associés à un train de roues du véhicule, une suspension et un dispositif de correction d'assiette du véhicule, laquelle suspension comprend pour chaque roue (R) un amortisseur hydropneumatique de suspension (20) et un ressort de suspension (24), **caractérisé en ce que** le dispositif de correction d'assiette du véhicule est équipé du groupe hydraulique motorisé (1) tel que défini dans l'une quelconque des revendications 1 à 6 et qui est solidaire du châssis du véhicule.

8. Véhicule selon la revendication 7, **caractérisé en ce que** le groupe hydraulique motorisé (1) est raccordé par une conduite à l'amortisseur hydropneumatique de suspension (20) adapté pour assurer une correction d'assiette du véhicule.

9. Véhicule selon la revendication 7, **caractérisé en ce que** le groupe hydraulique motorisé (1) est relié par une conduite à un vérin hydraulique annulaire (26) monté concentriquement sur le corps (21) de l'amortisseur (20) et apte à déplacer en translation relativement au corps (21) de l'amortisseur (20) sous la commande du groupe hydraulique (1) une coupelle (25) d'appui de l'extrémité inférieure du ressort de suspension (24) pour assurer une correction d'assiette du véhicule.
